# EUROPEAN PATENT APPLICATION

(11) **EP 0 960 836 A2**
(43) Date of publication of application: **01.12.1999**
(21) Application number: 99303208.5
(22) Date of filing: 26.04.1999
(51) Int. Cl.: B65G 1/137

(54) **Article selection and distribution system**

(30) Priority: 29.05.1998 US 86108
(71) Applicant: SI Handling Systems, Inc., Easton, Pennsylvania 18040-9295 (US)
(72) Inventor: Clark David A., Nazareth, Pennsylvania 18064 (US); Gurczenski, Walter John, New Castle, Delaware 19720 (US)
(74) Representative: Lyons, Andrew John

(57) **Abstract**

An article selection and distribution system (10) includes an article conveyor (14) having an article conveying surface (18) divided into discrete spaces, each space being uniquely correlated to an individual order. A plurality of article engaging members (22) extend from the article conveying surface of the article conveyor, and a plurality of article storage magazines (16) are arranged along a direction of movement of the article conveyor. Each article storage magazine has a dispensing end for releasably retaining articles (26) to be selected. A positioner (34) brings the article engaging members and the dispensing end of at least one article storage magazine into a position relative to each other in which the article engaging member is able to contact an article to be dispensed from the article storage magazine and cause that article to be removed from the article storage magazine and placed in one of the discrete spaces (24) on the article conveying surface of the article conveyor.

## Description

### Field of the Invention

The present invention pertains to automated selection and distribution of desired articles from a store of different articles and their assembly into discrete orders.

### Background of the Invention

Order picking is the selective retrieval of appropriate numbers and types of articles from a storage area to fill specific customer orders. Orders are usually represented by a list of stock keeping units (SKUs) or line items. The list specifies the type and quantity of each unit or item to be retrieved, along with other information such as the storage location, the scheduled picking period, the due date, the customer name and address, etc. Thus, an order picking system typically consists of physical subsystems including personnel and/or mechanical equipment required to select, retrieve, transport, check, pack, and ship, plus data processing subsystems that provide the information required to operate the physical subsystems.

Order picking or order selection systems often are part of the material handling systems within warehouses. The storage and retrieval capabilities of such material handling systems must keep up with demand for the ever-increasing variety of articles being made available to consumers. This increasing demand is being encountered for articles such as pharmaceutical products; cosmetics; health and beauty aids; contact lenses; photographic films; automotive equipment; compact discs; audio and video cassettes; books; and many other consumer products. This ever-increasing demand creates a need to improve the storage and retrieval capabilities of the warehouses that stock these commodities.

To meet these ever-increasing demands, warehouse material handling systems have been automated and, more particularly, are controlled by various computerized systems. Articles retrieved by computerized order selection systems need to be assembled in an efficient and orderly fashion to meet shipping requirements accurately and timely. Accurate and efficient order picking very often is crucial to being competitive in the market place.

There is a need for an article selection and distribution system which streamlines the overall selection and distribution process, minimizes the number of picking technologies needed, and which results in a simpler, more consistent system. The present invention fills that need.

### Summary of the Invention

The present invention is directed to an article selection and distribution system comprising an article conveyor having an article conveying surface divided into discrete spaces, each space being uniquely correlated to an individual order, a plurality of article engaging members extending from the article conveying surface of the article conveyor, a plurality of article storage magazines arranged along a direction of movement of the article conveyor, each article storage magazine having a dispensing end for releasably retaining articles to be selected, and a positioner for bringing the article engaging members and the dispensing end of at least one article storage magazine into a position relative to each other in which the article engaging member is able to contact an article to be dispensed from the article storage magazine and cause that article to be removed from the article storage magazine and placed in one of the discrete spaces on the article conveying surface of the article conveyor.

### Description of the Drawings

For the purpose of illustrating the invention, there is shown in the drawings a form which is presently preferred; it being understood, however, that this invention is not limited to the precise arrangements and instrumentalities shown.

Figure 1 is a partial view of an article selection and distribution system according to one embodiment of the present invention.

Figure 2 illustrates one embodiment of a storage magazine for use with the present invention.

Figure 3 is a partial view of the article selection and distribution system illustrated in Figure 1, showing an article being dispensed from a storage magazine onto an article conveyor.

Figure 4 is a sectional view, taken along the lines 4-4 in Figure 3.

Figure 5 is a sectional view, taken along the lines 5-5 in Figure 3.

Figure 6 illustrates an alternate embodiment of the present invention, in which discrete containers are used to collect and transport articles.

Figure 7 illustrates a second embodiment of a storage magazine for use with the present invention.

Figure 8 is a sectional view, taken along the lines 8-8 in Figure 7.

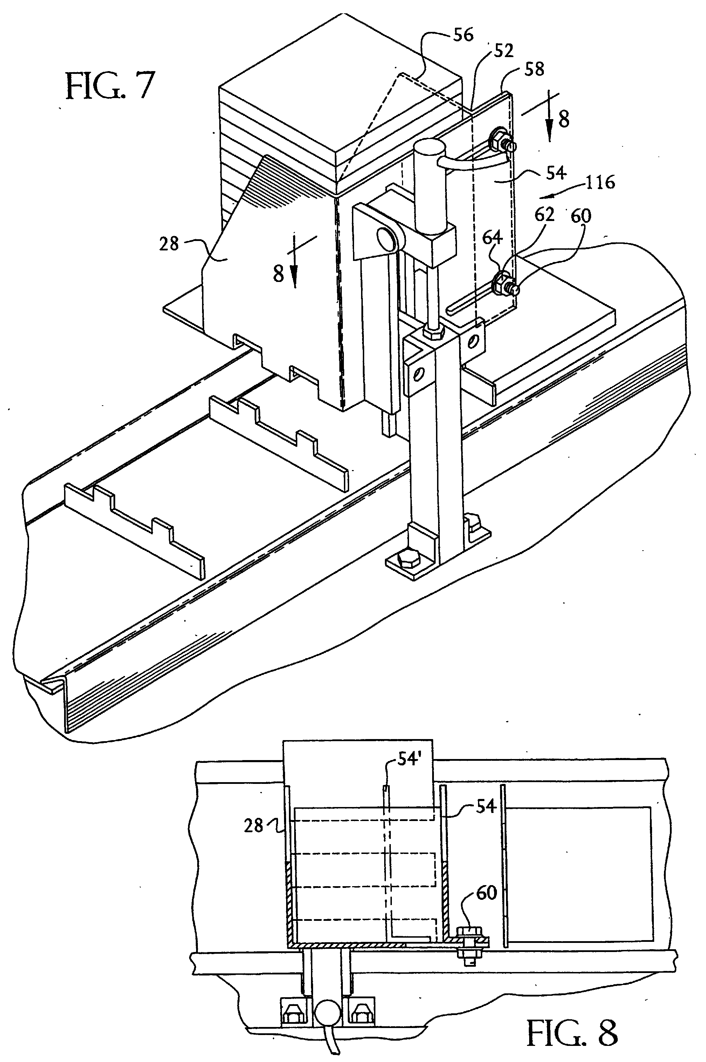

Figure 8 illustrates a third embodiment of a storage magazine for use with the present invention.

### Description of the Invention

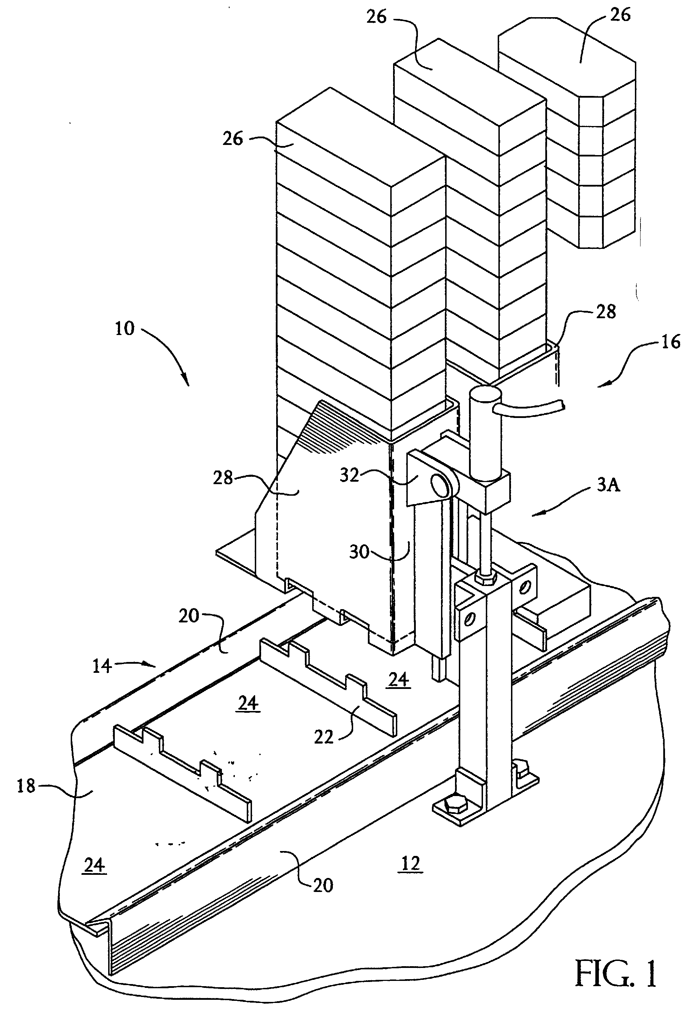

Referring now to the drawings, wherein like numerals indicate like elements, there is shown in Figure 1 a portion of an article conveying and distribution system 10 according to the present invention. System 10 comprises a support 12, which may be a floor or frame, an article conveyor 14, and a plurality of article storage magazines 16 arranged along the conveyor 14. Although only a few article storage magazines 16 are shown for convenience, it should be understood that the invention is not limited to any particular number of storage magazines.

Article conveyor, or simply "conveyor," 14 is preferable, although not necessarily, in the form of an endless belt 18, which is driven in conventional fashion. Rails 20 may optionally be provided along the lateral sides of belt 18 to guide articles to be dispensed onto the article conveying surface of conveyor 14, which, in the illustrated embodiment, is the top surface of belt 18.

A plurality of article engaging members 22 extend from the article conveying surface of belt 18. Article engaging members 22 may, for convenience, hereinafter be referred to simply as "cleats." The cleats 22 divide the article conveying surface of belt 18 into individual discrete spaces, or "flights," 24 which are uniquely correlated to an individual order in known fashion using known control techniques. The cleats 22 also operate in conjunction with magazines 16 to remove articles from the magazines, as will be described below.

It will be appreciated that cleats 22 may have a variety of shapes and sizes, depending upon the types of articles to be dispensed from magazines 16. Alternatively, it is within the scope of the invention to employ totes or other discrete containers conveyed by conveyor 14 and which are provided with article engaging members 22.

The article storage magazines, or simply "magazines," 16 are arranged above or along one side of conveyor 14, and are suspended above conveyor 14 so that they overhang at least a portion of the width of belt 18. As those skilled in the art will understand, "width" refers to the lateral dimensions of belt 18, for example the dimension of belt 18 between rails 20 when rails 20 are present. With this arrangement, individual articles dispensed from a magazine will fall by gravity onto the article conveying surface of belt 18.

Each magazine 16 is constructed to hold a plurality of individual articles 26 to be selected and distributed. Individual articles 26 may be of any type, and they may all be the same or a variety of different types of articles 26 may be stored in magazines 16. For example, articles 26 may comprise prerecorded videotapes. To the extent that the articles are all videotapes, they would be the same, but they may also be different in that different prerecorded information may be contained on different tapes. Moreover, articles 26 may comprise a mixture of prerecorded videotapes and compact discs, as just one more example. Clearly, the characteristics of the individual articles may vary considerably without departing from the present invention.

As illustrated in Figure 1, magazines 16 comprise opposed side walls 28 joined by end wall 30 to define an open channel. This structure permits easy and rapid restocking of magazines 16, but magazine may have any suitable shape and dimensions desired, and may, if desired, be uniquely configured for a specific article without departing from the present invention.

Magazines 16 are mounted for reciprocal vertical movement toward and away from conveyor 14. In the embodiment shown in Figure 1, the outer surface of end wall 30 is provided with a clevis 32 which enables a magazine to be attached to a positioner 34 which lowers and raises the magazine toward and away from belt 16. The details of one type of positioner suitable for use in the present invention will be described below.

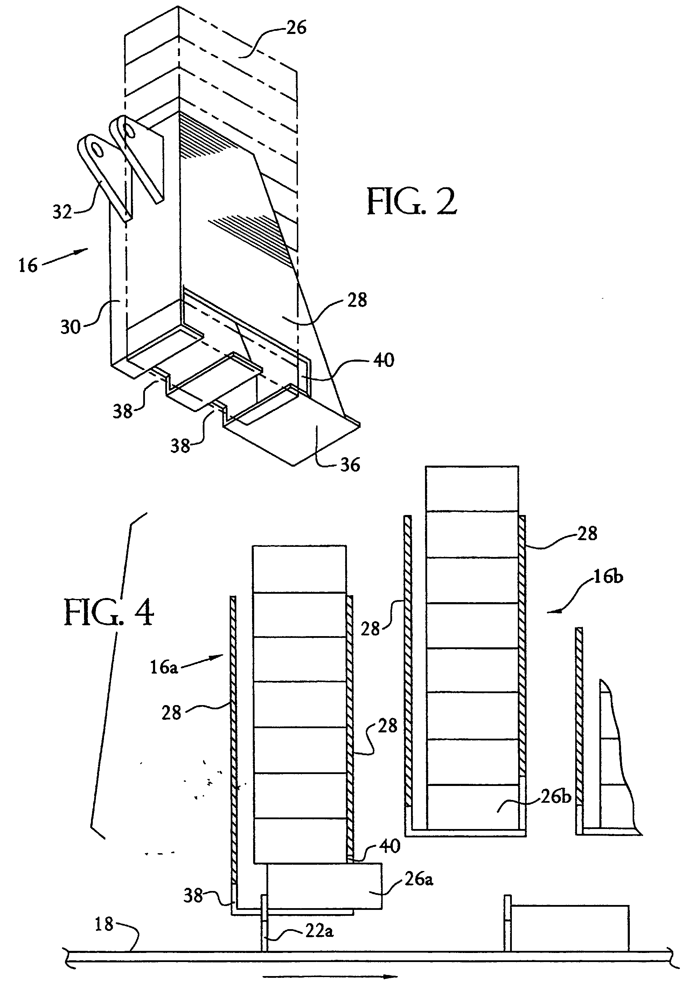

As best seen in Figure 2, magazines 16 have a bottom plate, or "floor," 36 which supports and releasably retains articles 26 which are to be dispensed from the magazines. Floor 36 has at least one opening 38 which extends across the entire floor between opposed side walls 28, and which extends through adjacent portions of the side walls 28. At least one of the side walls 28 is provided with an opening 40 large enough to permit passage of articles from the interior of magazine 16 through that side wall when it is desired to dispense a selected article 26 from the magazine 16. Opening 40 is in communication with opening (or openings, if more than one) 38.

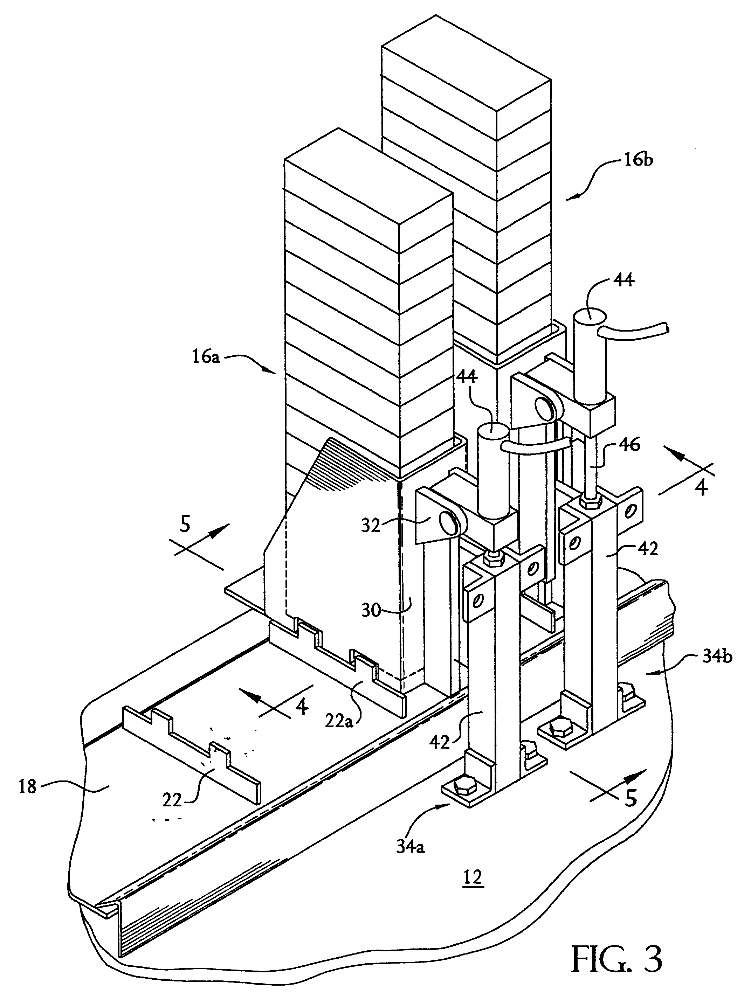

When it is desired to dispense an article from a selected magazine 16, the positioner 34 associated with the selected magazine is actuated to bring the openings 38 and 40 in floor 36 into a position adjacent conveyor 14 where an article resting on floor 36 may be engaged by a cleat 22 on belt 18, as shown in Figures 3, 4 and 5. In the embodiment illustrated, the positioner 34a lowers magazine 16a toward belt 18 so that a cleat, labeled 22a in those figures, extends through openings 38 in floor 36 of magazine 16a and engages article 26a supported by floor 36. Since conveyor is driven, as noted above, its movement will cause cleat 22a to push article 26a though opening 40 in side wall 28. As article 26a clears floor 36, it will drop by gravity onto space 24a which is ahead of cleat 22a. As it does so, the remaining articles drop by gravity within magazine 16a, so that the next article in magazine 16a comes to rest on floor 36. Article 26a in space 24a is then conveyed by conveyor 14 to a discharge location for further handling. Once article 26a is removed from magazine 16a, positioner 34a may be actuated to return magazine 16a to its raised position, or may be left in its lowered position to enable the next article in magazine 16a to be removed by a subsequent cleat 22.

Figures 3, 4, and 5 show a second magazine 16b next to magazine 16a. As illustrated in those figures, magazine 16b is in its raised position relative to belt 18, so that articles contained in magazine 16b are not dispensed as cleat 22a moves past magazine 16b. However, if desired, magazine 16b may be placed in its lowered position as cleat 22a approaches magazine 16b, so that an article 26b may be removed by cleat 22a and dispensed into space 24a on belt 18.

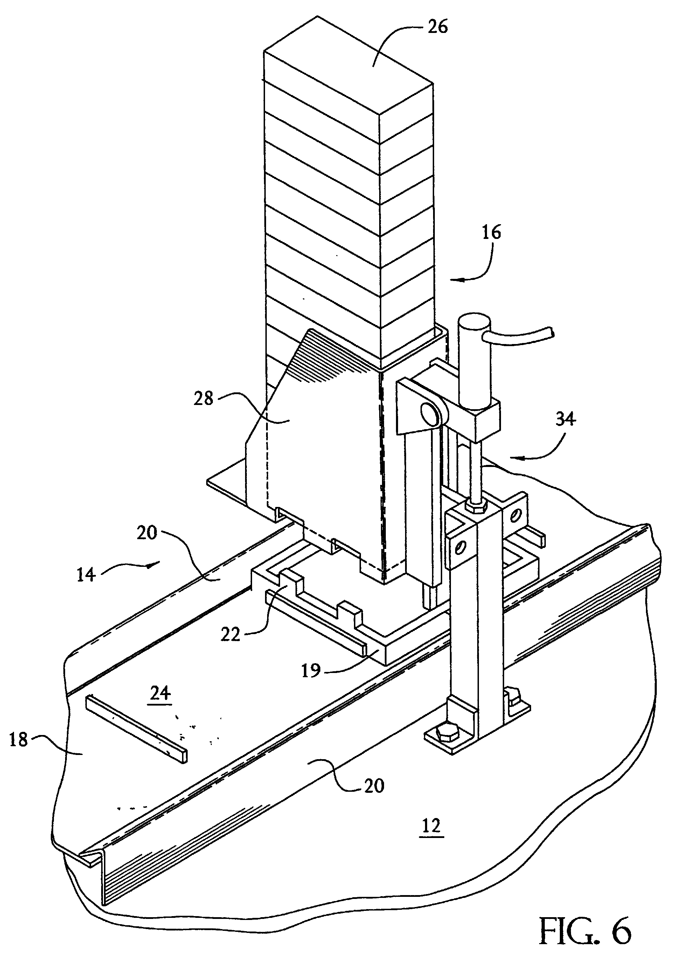

In the event that discrete containers, such as totes 19, are used, the article engaging members 22 are located on the totes 19 so that articles removed from a magazine 16 by an article engaging member 22 will drop by gravity into the tote 19, as illustrated in Figure 6, rather than onto a flight 24 on the belt 18.

It will be understood that each magazine, no matter how few or how many, may be positioned independently of all other magazines 16, so that different articles can be selectably dispensed onto a desired flight. In this manner, individual orders correlated to individual flights will be accumulated. The individual accumulated orders may then be removed from the discharge end of conveyor 14 for further processing, such as checking, packaging, labeling, and shipping.

It should be understood that the drawings, while useful in illustrating the invention, are not intended to necessarily be to scale. The dimensions and relative sizes and locations of the various parts shown can be varied, depending on the particular articles being handled, the number of articles being handled, the space available to house the system of the invention, and the like, without departing from the scope of the invention. To the extent that the drawings imply dimensions and relative sizes and positions, the drawings should be regarded as illustrative only and not as limiting the invention to particular dimensions, sizes, and location of parts.

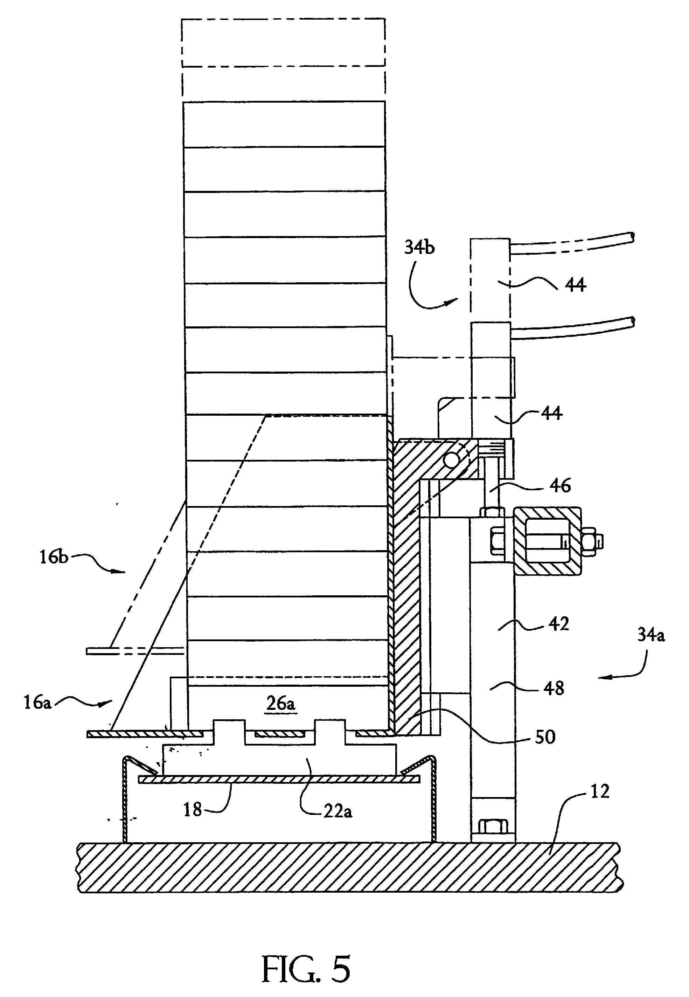

One type of positioner 34 suitable for use in the present invention may be best understood with reference to Figures 3 and 5. Positioner 34 includes a guide 42 fixedly mounted adjacent conveyor 14, preferably on support 12, and an actuator 44. Actuator may be a fluid cylinder, such as a pneumatic or hydraulic cylinder, or may be an electrically operated solenoid. Actuator 44 is attached to clevis 32 on rear wall 30 of magazine 16.

Actuator 44 is coupled to guide 42 by a rod 46. Rod 46 may be either fixed or movable with respect to actuator 44. If rod 46 is fixed with respect to actuator 44, it will be movable with respect to guide 42, and *vice versa.* Operation of actuator 44 enables relative movement of actuator 44 along rod 46 with respect to guide 44. As one example, if actuator 44 is a pneumatic cylinder, actuator 44 may be arranged so that pressurizing actuator 44 causes rod 44 to extend from actuator 44, thus elevating actuator 44 and magazine 16.

If desired, a cooperating key 48 and slide 50, as best seen in Figure 5, can be employed to ensure accurate reciprocal movement of magazine 16. As those skilled in the art will appreciate, if this feature is used, the key can be located on either magazine 16 or guide 42, while the slide 50 can be located on either guide 42 or magazine 16, respectively.

Those skilled in the art will also recognize that the particular form and details of positioner 34 are not crucial to the invention, and any suitable arrangement may be used without departing from the invention.

Of course, it will be appreciated by those skilled in the art that while the present invention has been described with reference to magazines which are moved toward and away from a belt, it is within the scope of the invention to move a portion of the conveying system toward a selected magazine, such as by selectably moving a set of rollers or other belt guides toward and away from the magazine so that an article engaging member on the belt may contact an article to be dispensed from the magazine. Alternatively, a movable cog may be moved up and down to bring cleats 22 on belt 18 into contact with an article to be dispensed from a magazine. The cog may either raise the belt 18 or lower the selected magazine, or both, so that a cleat 22 contacts an article desired to be dispensed onto belt 18.

It is also within the scope of the invention to move both the magazines and portions of the belt toward and away from each other to enable an article engaging means to contact an article to be dispensed. It is further within the scope of the invention to positively bias articles to be dispensed from the magazine toward the dispensing end of the magazine, such as by a spring or other biasing means, rather than rely on gravity. Such an arrangement, if used, would permit magazines to be arranged on their sides next to the conveyor, rather than upright above the conveyor.

The details of the mechanism used to bring the cleats 22 on belt 18 into engagement with articles to be dispensed is not crucial to the present invention, and any suitable mechanism can be employed without departing from the scope of the invention.

The magazine may also be made adjustable, to accommodate articles of different sizes at different times. For example, as illustrated in Figures 7 and 8, magazine 116 may have one fixed side wall 28 and one adjustable side wall 52. Side wall 52 has a portion 56 parallel to fixed side wall 28 and, at right angles to it, a flange 58 parallel to end wall 54. Flange 58 may have one or more openings in it through which extend bolts 60. Alternatively, instead of bolts 60, flange 58 may be provided with threaded studs fixed to flange 58 and which extend outward from it. End wall 54 is provided with slots in registry with bolts 60, so that bolts 60 can pass through end wall 54. Movable side wall 52 can be adjustably secured to end wall 54 by using nuts 62 and washers 64. As will be understood, movable side wall 54 can be moved toward or away from fixed side wall 28, as shown in Figure 8, so that magazine 116 can accommodate articles of different widths.

## Claims

1. An article selection and distribution system (10) comprising an article conveyor (14) having a plurality of discrete article receptacles (24), each receptacle being uniquely correlated to an individual order, a plurality of article engaging members (22) extending from the article receptacles, a plurality of article storage magazines (16) arranged along a direction of movement of the article conveyor, each article storage magazine having a dispensing end (38,40) for releasably retaining articles (26) to be selected, and a positioner (34) for bringing the article engaging members and the dispensing end of at least one article storage magazine into a position relative to each other in which the article engaging member is able to contact an article to be dispensed from the article storage magazine and cause that article to be removed from the article storage magazine and placed in one of the discrete article receptacles on the article conveyor.

2. An article selection and distribution system as in claim 1, wherein the receptacle (24) comprises a discrete space on an article conveying surface (18) of said article conveyor (14).

3. An article selection and distribution system as in claim 1 or 2, wherein the article conveying surface (18) is divided into discrete spaces (24) by the article engaging members (22).

4. An article selection and distribution system as claimed in claim 1, 2 or 3, wherein the magazine (16) is adjustable to accommodate articles (26) of different shapes and sizes.

5. An article selection and distribution system as claimed in any one of claims 1 to 4, wherein the positioner (34) acts on said at least one storage magazine (16) to move it toward and away from the article conveyor (14).

6. An article selection and distribution system as in claim 5,wherein the positioner (34) is fluid operated.

7. An article selection and distribution system as in claim 1, wherein the receptacle is a discrete container (19).

8. An article selection and distribution system as in claim 7, wherein the magazine (16) is adjustable to accommodate articles (26) of different shapes and sizes.

9. An article selection and distribution system as in claim 7 or 8, wherein the positioner (34) acts on said at least one storage magazine (16) to move it toward and away from the article conveyor (14).

10. An article selection and distribution system as in claim 9, wherein the positioner (34) is fluid-operated.
